(19) **Europäisches Patentamt**

**European Patent Office**

**Office européen des brevets**

(11) **EP 1 107 526 A1**

(12) **EUROPEAN PATENT APPLICATION**

(43) Date of publication:
**13.06.2001  Bulletin 2001/24**

(51) Int Cl.[7]: **H04L 25/02**, H04B 7/005

(21) Application number: **99403087.2**

(22) Date of filing: **09.12.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (74) Representative: **El Manouni, Josiane et al**<br>**COMPAGNIE FINANCIERE ALCATEL**<br>**Dépt. Propr. Industrielle,**<br>**30, avenue Kléber**<br>**75116 Paris (FR)** |
| (71) Applicant: **ALCATEL**<br>**75008 Paris (FR)** | Remarks:<br>Amended claims in accordance with Rule 86 (2) EPC. |
| (72) Inventor: **Agin, Pascal**<br>**94370 Sucy en Brie (FR)** | |

(54)    **Channel estimation using weighted averages over several time slots**

(57)    The invention concerns a method for estimating the channel impulse response in a digital telecommunication system, such as a CDMA system, wherein data and control signals are transmitted during time slots, these control signals comprising pilot bits which are used for the channel impulse response estimation, and wherein the channel impulse response is averaged over $n_{before}$ slots preceding the current slot and $n_{after}$ slots following this current slot, different weighting coefficients being used for the calculation of the average channel impulse response.

Each weighting coefficient $\omega_k$ is calculated with the following expression:

$$\omega_k = (A^{-1}V)_k \qquad (1)$$

where A is a square matrix of size $(n_{before}+n_{after}+1) \times (n_{before}+n_{after}+1)$ and V a vector of length $(n_{before}+n_{after}+1)$, A and V being defined by:

$$A_{qr} = E(\hat{h}^{(q)}(t)\hat{h}^{(r)}(t)^*) \qquad (2)$$

$$V_q = E(\hat{h}^{(q+n-n_{before})}(t)h^{(n)}(t)^*) \qquad (3)$$

wherein:

$A_{qr}$ is the component of matrix A of line q and column r,
$V_q$ is the $q^{th}$ component of vector V,
t is the time,
the function E(.) is the mathematical expectation, and
$h^{(r)}(t)^*$ is the conjugate of $\hat{h}^{(r)}(t)$.

FIG.1

EP 1 107 526 A1

**Description**

The invention relates to a method for estimating the channel response in a telecommunication system, such as a CDMA system.

In mobile telecommunication systems, a plurality of base stations is provided. The role of each base station is to receive communications transmitted by proximate mobile terminals and to transmit these received communications to a network or to another mobile terminal in the vicinity of this station. In other words, the base station has the function to receive communications for mobile terminals in the vicinity and to transmit communications to these proximate mobile terminals.

In these telecommunication systems of the multiple access type where the base station is communicating simultaneously with a plurality of users, it is necessary to distinguish between the different communications received from the users or sent to the users.

In order to make this distinction between different communications, in digital telecommunication systems, the main methods generally used are TDMA (Time Division Multiple Access) and CDMA (Code Division Multiple Access). In both methods, the information is sent into cells or packets during time slots. In TDMA, each time slot is used only by one user. Therefore, when the base station receives a plurality of communications from several users or terminals, to each user is allocated only one time slot. For instance, in the GSM standard -which uses FDMA in addition to TDMA-, each user is allocated one time slot every eight time slots.

In CDMA, each time slot is shared by a plurality of users, the different users being distinguished by a superimposed code. As well known, the different superimposed codes are orthogonal.

During each time slot, data and control information are transmitted. The control information comprises pilot bits. The pilot bits form a predetermined (known) sequence used to estimate the channel impulse response in the corresponding time slot. The channel impulse response represents the gain (in amplitude and phase) of all the transmission paths between transmitter and receiver for each time slot.

It is, in fact, necessary to estimate permanently the channel impulse response in order to estimate correctly the useful received data. For this estimation, the received signals are, for example, convoluted with the inverse channel impulse response, this convolution providing the estimated original useful data.

The channel impulse response estimation or "channel estimation" is a particularly important feature in all telecommunication systems, and more particularly the CDMA systems.

In order to obtain good channel estimation, it is known to average the channel impulse response over several slots, because, at low and medium mobile terminal speeds, the variations with time of the channel response are low, i.e., in this case, the channel impulse response varies slightly from slot to slot. With this averaging over several slots, a good estimation of the channel impulse response for the current slot is obtained.

Moreover, it is known to allocate different weighting coefficients to the contribution of each time slot for the averaging. More precisely:

The number of time slots used for the averaging depends generally on the mobile terminal speed. For low speeds, it is possible to average the channel impulse response over a greater number of time slots than for high speeds.

The averaging is performed in the following way:

- For each time slot of rank j, the channel impulse response $\hat{h}^{(j)}$ is estimated with the pilot bits of this slot and this channel estimation is kept in memory.
- For each time slot of rank n, the average channel response $\hat{h}^{(n)}_{average}$ is calculated according to the formula:

$$\hat{h}^{(n)}_{average} = \sum_{j=0}^{n_{before}+n_{after}} \omega_j \hat{h}^{(j+n-n_{before})} \qquad (F)$$

In other words, the averaging is performed on $(n_{before}+n_{after}+1)$ time slots, comprising $n_{before}$ time slots preceding the current time slot and $n_{after}$ time slots following this current slot.

For each communication, $n_{before}$, $n_{after}$ and the weighting coefficients $\omega_j$ have a constant value.

In this known technology, the weighting coefficients are determined empirically.

The invention results from the observation that this empirical method does not provide optimum weighting coefficients, i.e. the channel impulse response is not estimated at best.

The invention overcomes this drawback.

According to the invention, each weighting coefficient $\omega_k$ is calculated by using the following expression:

$$\omega_k = (A^{-1}V)_k \tag{1}$$

where A is a square matrix of size $(n_{before}+n_{after}+1) \times (n_{before}+n_{after}+1)$ and V a vector of length $(n_{before}+n_{after}+1)$, A and V being defined by:

$$A_{qr} = E(\hat{h}^{(q)}(t)\hat{h}^{(r)}(t)^*) \tag{2}$$

$$V_q = E(\hat{h}^{(q+n-n_{before})}(t)h^{(n)}(t)^*) \tag{3}$$

In these formulas:

$A_{qr}$ is the component of matrix A of line q and column r,
$V_q$ is the $q^{th}$ component of vector V,
t is the time,
the function E(.) is the mathematical expectation, and
$h^{(r)}(t)^*$ is the conjugate of $h^{(r)}(t)$.

It is recalled here that the conjugate of a complex number a + jb (where $j^2 = -1$) is a-jb.
The formulas (1), (2) and (3) above imply that the statistical properties of the channel impulse response are known. Studies performed in the frame of the invention have shown that the correlation between the channel response of rank n and the channel response of rank n + m can be expressed by the following formula:

$$E(h^{(n)}(t)h^{(n+m)}(t)^*) = EJ_0(2\pi f_d m T_s) \tag{4}$$

In this formula, $J_0(.)$ is the zero order Bessel function, $f_d$ is the Doppler frequency, $T_s$ is the slot period (duration) and E is the average energy of the channel impulse response. The Doppler frequency is:

$$f_d = \frac{V}{c} f,$$

where v is the mobile speed in m/s, $c=3.10^8$ m/s is the light speed in free space and f is the carrier frequency (around 2GHz in the example of UMTS).
In this case, the values of $A_{qr}$ and q are:

$$A_{qr} = EJ_0 (2\pi f_d |q-r| T_s) + R_{mn} \tag{5}$$

$$V_q = EJ_0 (2\pi f_d |q-n_{before}| T_s) \tag{6}$$

In formula (5), $R_{mn} = E(b^{(n)}(t)b^{(n+m)}(t)^*)$, where: $b^{(n)}(t)=\hat{h}^{(n)}(t)-h^{(n)}(t)$ is the estimation error of the channel impulse response, i.e.:

$$E(b^{(n)}(t)b^{(n+m)}(t)^*)=0 \text{ if } m \neq 0.$$

This estimation error depends on the channel estimation method. In a preferred embodiment, it is assumed that this noise (estimation error) is approximately a white noise of variance $\sigma^2$; therefore, the formulas (5) and (6) can be simplified as follows:

$$A_{qr} = EJ_0(2\pi f_d |q-r| T_s) + \sigma^2 \delta_{qr} \tag{7}$$

$$V_q = EJ_0 \, (2\pi f_d |q-n_{before}|T_s) \tag{8}$$

In the formula (7), $\delta_{qr}$ is a Dirac function where $\delta_{qr} = 1$ for $q = r$ and $\delta_{qr} = 0$ for $q \neq r$.

From these formulas (7) and (8), one can see that $A_{qr}$ and Vq, and therefore the weighting coefficient $\omega_k$, depend only on the ratio $E/\sigma^2$.

In an embodiment, this ratio has a fixed value. In another embodiment, E and $\sigma^2$ are estimated by conventional means.

In an embodiment, A is replaced by $E.I_d$, where $I_d$ is the identity matrix of size ($n_{before} + n_{after} + 1$), i.e. $\omega_q = V_q/E$. Thus:

$$\omega_q = J_0 \, (2\pi f_d |q-n_{before}|T_s) \tag{9}$$

Since the weighting coefficients $\omega_q$ must be positive, the following relations must be satisfied:

$$2\pi f_d n_{before} T_s < x_0 \tag{10}$$

$$2\pi f_d n_{after} T_s < x_0 \tag{11}$$

where $x_0$ is the smallest positive number such that $J_0(x_0)=0$ ($x_0 \approx 2.4$). It can be observed that the maximum values of $n_{before}$ and $n_{after}$ depend on the Doppler frequency and, therefore, on the speed.

The estimation of the channel response is optimum when $n_{before}$ and $n_{after}$ have their maximum value. However, if $n_{before}$ and $n_{after}$ have big values, it is necessary to provide a memory of great capacity and the calculations are complex. Therefore, it may be preferable to select $n_{before}$ and $n_{after}$ with values which are inferior to their respective maximum values.

The calculation of the zero order Bessel functions may be performed in real time or may be precalculated with look-up tables.

If the weighting coefficients are calculated with the help of formulas (5) and (6), $R_{mn}$ can be estimated either dynamically (real time) or a fixed value may be assigned to this noise depending parameter.

It is also to be noted that the weighting coefficients may be calculated in real time and, in that case, these coefficients vary with the speed.

In another embodiment, the weighting coefficients are predetermined, i.e. precomputed for different discrete speeds.

In an embodiment, the optimum weighting coefficients are determined for only one speed, which is an average speed, for instance 50 km/h. These predetermined coefficients, which are selected for one speed, are, in an embodiment, determined for each cell, i.e. for each geographical zone associated to a base station. In this case, the predetermined coefficients may vary during one communication when the user moves from one cell to another cell. Those predetermined coefficients may be also determined in view of other parameters, for instance for each user, or each group of users.

When the weighting coefficients are estimated dynamically, it may be necessary to determine the Doppler frequency $f_d$ or the mobile speed. This mobile speed may be estimated either in the mobile terminal itself, or in the base station. In the latter case, the base station provides to the terminal either the estimated speed or the weighting coefficients which are calculated in this base station.

In another embodiment, in order to simplify the dynamic calculation of the weighting coefficients, an estimation of the speed of the mobile terminal is performed and the coefficients are calculated only for a limited number n of speeds (or a limited number of Doppler frequencies). In that case among the n speeds, it is determined the one which has the closest value to the estimated speed and the selected weighting coefficients are those corresponding to this closest speed.

The invention provides a method for estimating the channel impulse response in a digital telecommunication system, such as a CDMA system, wherein data and control signals are transmitted during time slots, these control signals comprising pilot bits which are used for the channel impulse response estimation, and wherein the channel impulse response is averaged over several slots, different weighting coefficients being used for the calculation of the average channel impulse response $h^{(n)}_{average}$ according to the formula below:

$$\hat{h}^{(n)}_{average} = \sum_{j=0}^{n_{before}+n_{after}} \omega_j \hat{h}^{(j+n-n_{before})} \qquad (F),$$

$n_{before}$ and $n_{after}$ being the number of preceding and following time slots before and after the current time slot, and $\omega_j$ are said weighting coefficients.

Each weighting coefficient $\omega_k$ is calculated by using the following expression:

$$\omega_k = (A^{-1}V)_k \qquad (1)$$

In an embodiment, $A_{qr}$ and $Vq$ are determined by the following relations:

$$A_{qr} = EJ_0 (2\pi f_d|q\text{-}r|T_s)+R_{mn} \qquad (5)$$

$$V_q = EJ_0 (2\pi f_d|q\text{-}n_{before}|T_s) \qquad (6)$$

wherein: $R_{mn} = E(b^{(n)}(t)b^{(n+m)}(t)^*)$, and $b^{(n)}(t) = \hat{h}^{(n)}(t)\text{-}h^{(n)}(t)$ represents the estimation error, or noise, for the channel impulse response time, E is the average energy of the channel impulse response, $f_d$ is the Doppler frequency, $T_s$ is the time slot duration, and $J_0(.)$ is the zero order Bessel function.

In an embodiment, a constant value is assigned to $R_{mn}$.

In an embodiment, $A_{qr}$ and $Vq$ are determined according to the following formulas:

$$A_{qr} = EJ_0 (2\pi f_d|q\text{-}r|T_s)+\sigma^2\delta_{qr} \qquad (7)$$

$$V_q = EJ_0 (2\pi f_d|q\text{-}n_{before}|T_s) \qquad (8)$$

in these formulas, $\sigma^2$ is the variance of a white noise and $\delta_{qr}$ is a Dirac function such that $\delta_{qr} = 1$ for q = r and $\delta_{qr} = 0$ for $q \neq r$.

In an embodiment, a constant value is assigned to $E/\sigma^2$.

In an embodiment, $E/\sigma^2$ is estimated during a communication.

In an embodiment, the coefficients $\omega_q$ are determined by the following formula:

$$\omega_q = J_0 (2\pi f_d|q\text{-}n_{before}|T_s) \qquad (9)$$

In an embodiment, the number of time slots $n_{before}$ and $n_{after}$ which are used for the averaging satisfy to the following relations:

$$2\pi f_d n_{before} T_s < x_0 \qquad (10)$$

$$2\pi f_d n_{after} T_s < x_0 \qquad (11)$$

where $x_0$ is the smallest positive number such that $J_0(x_0) = 0$.

In an embodiment, for the calculation of the zero order Bessel function, use is made of a look-up table.

In an embodiment, the weighting coefficients are determined dynamically.

In an embodiment, the weighting coefficients are predetermined for each mobile terminal speed or for each Doppler frequency.

In an embodiment, the speed or Doppler frequency of the mobile terminal is estimated in the mobile terminal.

In an embodiment, the weighting coefficients are made independent of the speed or Doppler frequency, these coefficients being calculated for one average speed.

In an embodiment, the average speed depends on the location of the mobile terminal.

In an embodiment, the mobile terminal speed or mobile terminal Doppler frequency is determined in the base station communicating with the mobile terminal and this mobile terminal speed or Doppler frequency is used to calculate the weighting coefficients either in the mobile terminal, or in the base station, the base station transmitting the values of the weighting coefficients to the mobile terminal in the latter case.

In an embodiment, a limited number of discrete values is assigned to the mobile terminal speed, or Doppler frequency.

The invention provides also a mobile terminal device comprising means for estimating the channel impulse response for a digital telecommunication system, such as a CDMA system, wherein data and control signals are transmitted during time slots, these control signals comprising pilot bits which are used for the channel impulse response estimation, and wherein the channel impulse response is averaged over several slots, different weighting coefficients being used for the calculation of the average channel impulse response $h_{average}^{(n)}$ according to the formula (F) above.

The means for estimating the channel impulse response comprises means for calculating each weighting coefficient $\omega_k$ by using the following expression:

$$\omega_k = (A^{-1}V)_k \tag{1}$$

where A is a square matrix of size $(n_{before}+n_{after}+1)\times(n_{before}+n_{after}+1)$ and V a vector of length $(n_{before}+n_{after}+1)$, A and V being defined by formulas (2) and (3) above.

In an embodiment, the terminal device comprises memory means containing predetermined weighting coefficients for each mobile terminal speed or for each Doppler frequency.

In an embodiment, the terminal device comprises means for estimating the speed or the Doppler frequency.

In an embodiment, the calculating means are such that the weighting coefficients are independent of the speed or Doppler frequency, these coefficients being calculated for one average speed.

In an embodiment, the calculating means are such that the average speed depends on the location of the mobile terminal.

In an embodiment, the terminal device comprises means for receiving, from the base station communicating with this mobile terminal, a signal representing the mobile terminal speed or mobile terminal Doppler frequency and this mobile terminal speed or Doppler frequency is used to calculate the weighting coefficients.

In an embodiment, the calculating means comprise memory means containing a limited number of discrete values assigned to the mobile terminal speed, or Doppler frequency.

The invention concerns also a base station for a digital telecommunication system, such as a CDMA system, wherein said station is able to communicate with a plurality of mobile terminals and it comprises means for estimating the channel impulse response of each channel, the telecommunication system being such that data and control signals are transmitted during time slots, these control signals comprising pilot bits which are used for the channel impulse response estimation, and wherein the channel impulse response is averaged over several slots, different weighting coefficients being used for the calculation of the average channel impulse response $h_{average}^{(n)}$ according to the formula (F) above.

The station comprises means for calculating each weighting coefficient $\omega_k$ by using the following expression:

$$\omega_k = (A^{-1}V)_k \tag{1}$$

where A is a square matrix of size $(n_{before}+n_{after}+1)\times(n_{before}+n_{after}+1)$ and V a vector of length $(n_{before}+n_{after}+1)$, A and V being defined by formulas (2) and (3) above.

In an embodiment, the station comprises memory means containing predetermined weighting coefficients for each mobile terminal speed or for each Doppler frequency of the corresponding terminal with which it communicates.

The station comprises means for estimating the speed or Doppler frequency of each mobile terminal with which it communicates.

In an embodiment, the calculating means are such that the weighting coefficients are made independent of the speed or Doppler frequency of each mobile terminal with which the station is communicating, these coefficients being calculated for one average speed.

In an embodiment, the calculating means are such that the average speed depends on the location of the mobile terminal.

In an embodiment, the station comprises further calculation means using the mobile terminal speed or Doppler frequency to calculate the weighting coefficients in the base station, said base station comprising means to transmit the values of the weighting coefficients to the mobile terminal.

In an embodiment, the station comprises means for transmitting the mobile terminal speed to each terminal with which it communicates.

In an embodiment, the calculating means comprise memory means containing a limited number of discrete values assigned to the mobile terminal speed, or Doppler frequency.

Other features and advantages of the invention will appear with the following description wherein:

figure 1 shows a succession of time slots,
figure 2 is a simplified drawing which is used to explain some aspects of the invention, and
figure 3 is a diagram representing the general shape of the zero order Bessel function.

The example of the invention which will be described with the drawings corresponds to the use of CDMA technology for mobile terminals, such as mobile telephones. In this technology, it is necessary to permanently estimate the channel response, i.e. the gain of the physical channel between the transmitter T and the receiver R so that the received data may be corrected with the inverse gain.

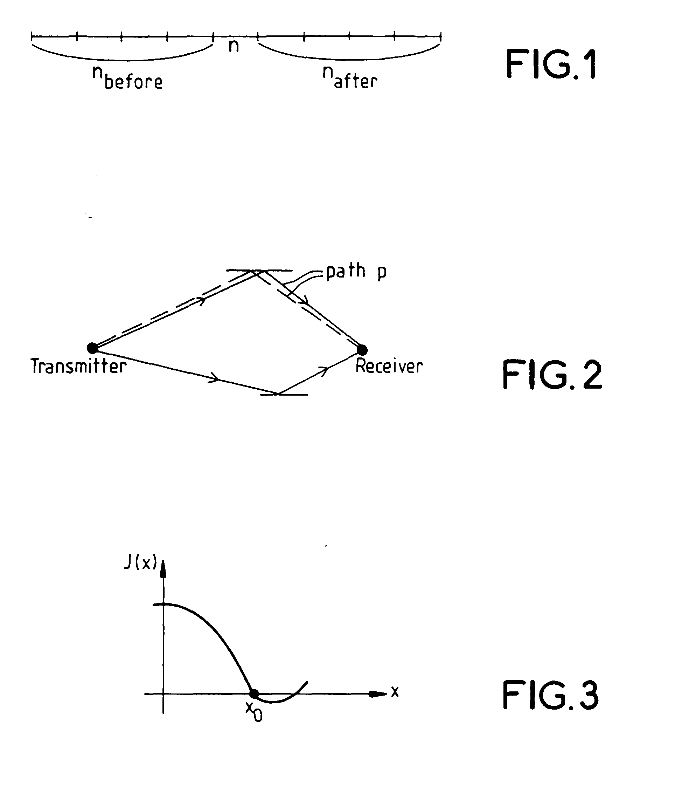

For determining the channel impulse response, use is made of pilot bits of the current time slot of rank n + $n_{after}$ (figure 1). As for each time slot, an average channel response is estimated for $n_{before} + n_{after} + 1$ time slots, it is necessary to keep in memory each channel response estimation in order to be able to calculate a channel average according to formula (F) above.

In order to determine the optimum values of weighting coefficients $\omega_j$ of this formula (F), the inventor studied the statistical properties of the channel response. For this study, it was considered that the channel impulse response $h^{(n)}(t)$ is the superposition of N uncorrelated paths and said channel impulse response has the following value:

$$h^{(n)}(t) = \sum_{p=1}^{N} c_p^{(n)} p(t - \tau_p) \qquad (12)$$

where $C_p^{(n)}$ is the complex amplitude (gain) of the p-th path during the n-th slot, $\tau_p$ is the delay of the reception with respect to the transmission for the p-th path during the n-th slot, and p(t) is a pulse-shaping filter.

The pulse-shaping filter is considered to be included in the channel impulse response and to have a normalized energy equal to zero dB. It is also assumed that the complex amplitude $C_p^{(n)}$ and the delay $\tau_p$ are practically constant during a time slot.

The channel impulse response estimation consists in estimating the delays and amplitudes of the $N_m$ main paths where usually $N_m < N$. The amplitude estimation is only considered here. The delays $\tau_p$ may be estimated conventionally, for instance as described in the book of Andrew J. Viterbi, entitled "CDMA principle of spread spectrum communications".

Each individual path p (figure 2) represents the superposition of numerous paths that are very close to each other. For studying the time variations of the amplitude of each path, the Jakes model is used here. According to the Jakes' model, the following relations are fulfilled for any p, n and m:

$$E(a_p^{(n)} a_p^{(n+m)}) = \frac{EP}{2} J_0(2\pi f_d m T_s) \qquad (13)$$

$$E(b_p^{(n)} b_p^{(n+m)}) = \frac{EP}{2} J_0(2\pi f_d m T_s) \qquad (14)$$

$$E(a_p^{(n)} b_p^{(n+m)}) = 0 \qquad (15)$$

where $c_n^{(k)} = a_n^{(k)} + j b_n^{(k)}$ ($j^2 = -1$),

$$E_p = E\left(\left|C_p^{(n)}\right|^2\right),$$

$J_0(.)$ is the zero-order Bessel function, $f_d$ is the Doppler frequency, $T_s$ is the slot period and E(.) is the mathematical expectation.

From formulas (13), (14) and (15), it can be established that:

$$E(c_p^{(n)}(c_p^{(n+m)})^*) = E_p J_0(2\pi f_d m T_s) \tag{16}$$

and formula (4) above is derived from this formula (16).

The average energy E of the channel impulse response in formula (4) has the following value:

$$E = \sum_{p=1}^{N} E_p .$$

The statistical properties of the channel response which are defined by formula (4) above are used to determine the optimum values of the weighting coefficients according to formulas (1), (2) and (3). These last formulas make use of the theory of optimal filtering, or Wiener filtering, which is described, for instance, in a book entitled: "Signal et communication numerique - Egalisation et synchronisation" (Signal and digital communication - Equalization and synchronization) by Jean-Marc BROSSIER - Hermes editor, France.

Figure 3 represents a zero order Bessel function where $x_0$ is the smallest positive number such that $J_0(x_0)=0$.

With the calculation of the weighting coefficients using either the formulas (5) and (6), or the formulas (7) and (8), or the formula (9) - these coefficients being predetermined or calculated dynamically - the weighting coefficients have optimal values. As a result, for each communication, better performances are obtained, i.e. a higher quality of demodulation.

The method according to the invention may be implemented in each terminal and/or in the base station of a telecommunication system.

**Claims**

1. Method for estimating the channel impulse response in a digital telecommunication system, such as a CDMA system, wherein data and control signals are transmitted during time slots, these control signals comprising pilot bits which are used for the channel impulse response estimation, and wherein the channel impulse response is averaged over several slots, different weighting coefficients being used for the calculation of the average channel impulse response $\hat{h}^{(n)}_{\text{average}}$ according to the formula below:

$$\hat{h}^{(n)}_{\text{average}} = \sum_{j=0}^{n_{\text{before}} + n_{\text{after}}} \omega_j \hat{h}^{(j+n-n_{\text{before}})} \tag{F},$$

$n_{\text{before}}$ and $n_{\text{after}}$ being the number of preceding and following time slots before and after the current time slot, and $\omega_j$ are said weighting coefficients, characterized in that each weighting coefficient $\omega_k$ is calculated by using the following expression:

$$\omega_k = (A^{-1}V)_k \tag{1}$$

where A is a square matrix of size $(n_{before}+n_{after}+1)\times(n_{before}+n_{after}+1)$ and V a vector of length $(n_{befOre}+n_{after}+1)$, A and V being defined by:

$$A_{qr} = E(\hat{h}^{(q)}(t)\hat{h}^{(r)}(t)^{*}) \qquad (2)$$

$$V_q = E(\hat{h}^{(q+n-n_{before})}(t)h^{(n)}(t)^{*}) \qquad (3)$$

In these formulas:

$A_{qr}$ is the component of matrix A of line q and column r,
$V_q$ is the $q^{th}$ component of vector V,
t is the time,
the function E(.) is the mathematical expectation, and
$h^{(r)}(t)^{*}$ is the conjugate of $h^{(r)}(t)$.

**2.** Method according to claim 1, characterized in that $A_{qr}$ and Vq are determined by the following relations:

$$A_{qr} = EJ_0 (2\pi f_d|q-r|T_s)+R_{mn} \qquad (5)$$

$$V_q = EJ_0 (2\pi f_d|q-n_{before}|T_s) \qquad (6)$$

wherein: $R_{mn} = E(b)^{(n)}(t)b^{(n+m)}(t)^{*})$, and $b^{(n)}(t) = \hat{h}^{(n)}(t)-h^{(n)}(t)$ represents the estimation error, or noise, for the channel impulse response time, E is the average energy of the channel impulse response, $f_d$ is the Doppler frequency, $T_s$ is the time slot duration, and $J_0(.)$ is the zero order Bessel function.

**3.** Method according to claim 2, characterized in that a constant value is assigned to $R_{mn}$.

**4.** Method according to claim 2 or 3, wherein $A_{qr}$ and Vq are determined according to the following formulas:

$$A_{qr} = EJ_0 (2\pi f_d|q-r|T_s)+\sigma^2\delta_{qr} \qquad (7)$$

$$V_q = EJ_0 (2\pi f_d|q-n_{before}|T_s) \qquad (8)$$

in these formulas, $\sigma^2$ is the variance of a white noise and $\delta_{qr}$ is a Dirac function such that $\delta_{qr} = 1$ for q = r and $\delta_{qr} = 0$ for q ≠ r.

**5.** Method according to claim 4, wherein a constant value is assigned to $E/\sigma^2$.

**6.** Method according to claim 4, wherein $E/\sigma^2$ is estimated during a communication.

**7.** Method according to claim 1, wherein the coefficients $\omega_q$ are determined by the following formula:

$$\omega_q = J_0 (2nf_d|q-n_{before}|T_s) \qquad (9)$$

**8.** Method according to any of claims 2-7, characterized in that the number of time slots $n_{before}$ and $n_{after}$ which are used for the averaging satisfy to the following relations:

$$2\pi f_d n_{before}T_s < x_0 \qquad (10)$$

$$2\pi f_d n_{after} T_s < x_0 \qquad (11)$$

where $x_0$ is the smallest positive number such that $J_0(x_0) = 0$.

9. Method according to any of claims 2-7, characterized in that, for the calculation of the zero order Bessel function, use is made of a look-up table.

10. Method according to any of the previous claims, characterized in that the weighting coefficients are determined dynamically.

11. Method according to any of claims 1-9, characterized in that the weighting coefficients are predetermined for each mobile terminal speed or for each Doppler frequency.

12. Method according to any of claims 1-11, characterized in that the speed or Doppler frequency of the mobile terminal is estimated in the mobile terminal.

13. Method according to any of claims 1-11, characterized in that the weighting coefficients are made independent of the speed or Doppler frequency, these coefficients being calculated for one average speed.

14. Method according to claim 13, characterized in that the average speed depends on the location of the mobile terminal.

15. Method according any of claims 1-11, characterized in that the mobile terminal speed or mobile terminal Doppler frequency is determined in the base station communicating with the mobile terminal and in that this mobile terminal speed or Doppler frequency is used to calculate the weighting coefficients either in the mobile terminal, or in the base station, the base station transmitting the values of the weighting coefficients to the mobile terminal in the latter case.

16. Method according to any of claims 1-11, characterized in that a limited number of discrete values is assigned to the mobile terminal speed, or Doppler frequency.

17. A mobile terminal device comprising means for estimating the channel impulse response for a digital telecommunication system, such as a CDMA system, wherein data and control signals are transmitted during time slots, these control signals comprising pilot bits which are used for the channel impulse response estimation, and wherein the channel impulse response is averaged over several slots, different weighting coefficients being used for the calculation of the average channel impulse response $h^{(n)}_{average}$ according to the formula below:

$$\hat{h}^{(n)}_{average} = \sum_{j=0}^{n_{before}+n_{after}} \omega_j \hat{h}^{(j+n-n_{before})} \qquad (F),$$

$n_{before}$ and $n_{after}$ being the number of preceding and following time slots before and after the current time slot, and $\omega_j$ are said weighting coefficients, characterized in that the means for estimating the channel impulse response comprises means for calculating each weighting coefficient $\omega_k$ by using the following expression:

$$\omega_k = (A^{-1}V)_k \qquad (1)$$

where A is a square matrix of size $(n_{before}+n_{after}+1) \times (n_{before}+n_{after}+1)$ and V a vector of length $(n_{before}+n_{after}+1)$, A and V being defined by:

$$A_{qr} = E(\hat{h}^{(q)}(t)\hat{h}^{(r)}(t)^*) \qquad (2)$$

$$V_q = E(h^{\wedge(q+n-n_{before})}(t)h^{(n)}(t)^*) \tag{3}$$

In these formulas:

$A_{qr}$ is the component of matrix A of line q and column r,

Vq is the $q^{th}$ component of vector V,

t is the time,

the function E(.) is the mathematical expectation, and

$h^{(r)}(t)^*$ is the conjugate of $h^{(r)}(t)$.

**18.** A terminal device according to claim 17, characterized in that, said calculation means comprise means for determining $A_{qr}$ and Vq by the following relations:

$$A_{qr} = EJ_0\ (2\pi f_d|q\text{-}r|T_s)+R_{mn} \tag{5}$$

$$V_q = EJ_0\ (2\pi f_d|q\text{-}n_{before}|T_s) \tag{6}$$

wherein: $R_{mn} = E(b)^{(n)}(t)b^{(n+m)}(t)^*)$, and $b^{(n)}(t) = \hat{h}^{(n)}(t)\text{-}h^{(n)}(t)$ represents the estimation error, or noise, for the channel impulse response time, E is the average energy of the channel impulse response, $f_d$ is the Doppler frequency, $T_s$ is the time slot duration, and $J_0(.)$ is the zero order Bessel function.

**19.** A terminal device according to claim 18, characterized in that said determining means comprise means for assigning a constant value to $R_{mn}$.

**20.** A terminal device according to claim 18 or 19, characterized in that said determination means comprise means to determine $A_{qr}$ and Vq according to the following formulas:

$$A_{qr} = EJ_0\ (2\pi f_d|q\text{-}r|T_s)+\sigma^2\delta_{qr} \tag{7}$$

$$V_q = EJ_0\ (2\pi f_d|q\text{-}n_{before}|T_s) \tag{8}$$

in these formulas, $\sigma^2$ is the variance of a white noise and $\delta_{qr}$ is a Dirac function such that $\delta_{qr} = 1$ for q = r and $\delta_{qr} = 0$ for q ≠ r.

**21.** A terminal device according to claim 20, characterized in that it comprises means to assign a constant value to $E/\sigma^2$.

**22.** A terminal device according to claim 20, characterized in that it comprises means to estimate $E/\sigma^2$ during a communication.

**23.** A terminal device according to claim 17, characterized in that it comprises means to determine the coefficients $\omega_q$ by the following formula:

$$\omega_q = J_0\ (2\pi f_d|q\text{-}n_{before}|T_s) \tag{9}$$

**24.** A terminal device according to any of claims 18-22, characterized in that it comprises means to determine the number of time slots $n_{before}$ and $n_{after}$ which are used for the averaging such that said numbers satisfy to the following relations:

$$2\pi f_d n_{before} T_s < x_0$$

$$2\pi f_d n_{after} T_s < x_0 \tag{11}$$

where $x_0$ is the smallest positive number such that $J_0(x_0) = 0$.

**25.** A terminal device according to any of claims 18-23, characterized in that it comprises a look-up table for the determination of the zero order Bessel function.

**26.** A terminal device according to any of the claims 17-25, characterized in that it comprises means for determining dynamically the weighting coefficients.

**27.** A terminal device according to any of claims 17-25, characterized in that it comprises memory means containing predetermined weighting coefficients for each mobile terminal speed or for each Doppler frequency.

**28.** A terminal device according to any of claims 17-27, characterized in that it comprises means for estimating the speed or the Doppler frequency.

**29.** A terminal device according to any of claims 17-28, characterized in that the calculating means are such that the weighting coefficients are independent of the speed or Doppler frequency, these coefficients being calculated for one average speed.

**30.** A terminal device according to claim 29, characterized in that the calculating means are such that the average speed depends on the location of the mobile terminal.

**31.** A terminal device according any of claims 17-27, characterized in that it comprises means for receiving, from the base station communicating with this mobile terminal, a signal representing the mobile terminal speed or mobile terminal Doppler frequency and in that this mobile terminal speed or Doppler frequency is used to calculate the weighting coefficients.

**32.** A terminal device according to any of claims 17-27, characterized in that the calculating means comprise memory means containing a limited number of discrete values assigned to the mobile terminal speed, or Doppler frequency.

**33.** A base station for a digital telecommunication system, such as a CDMA system, wherein said station is able to communicate with a plurality of mobile terminals and it comprises means for estimating the channel impulse response of each channel, the telecommunication system being such that data and control signals are transmitted during time slots, these control signals comprising pilot bits which are used for the channel impulse response estimation, and wherein the channel impulse response is averaged over several slots, different weighting coefficients being used for the calculation of the average channel impulse response $\hat{h}^{(n)}_{average}$ according to the formula below:

$$\hat{h}^{(n)}_{average} = \sum_{j=0}^{n_{before}+n_{after}} \omega_j \hat{h}^{(j+n-n_{before})} \tag{F},$$

$n_{before}$ and $n_{after}$ being the number of preceding and following time slots before and after the current time slot, and $\omega_j$ are said weighting coefficients, characterized in that the station comprises means for calculating each weighting coefficient $\omega_k$ by using the following expression:

$$\omega_k = (A^{-1}V)_k \tag{1}$$

where A is a square matrix of size $(n_{before}+n_{after}+1) \times (n_{before}+n_{after}+1)$ and V a vector of length $(n_{before}+n_{after}+1)$, A and V being defined by:

$$A_{qr} = E(\hat{h}^{(q)}(t)\hat{h}^{(r)}(t)^{*}) \tag{2}$$

$$V_q = E(\hat{h}^{(q+n-n_{before})}(t)h^{(n)}(t)^{*}) \tag{3}$$

In these formulas:

$A_{qr}$ is the component of matrix A of line q and column r,
$V_q$ is the $q^{th}$ component of vector V,
t is the time,
the function E(.) is the mathematical expectation, and
$h^{(r)}(t)^{*}$ is the conjugate of $h^{(r)}(t)$.

**34.** A station according to claim 33, characterized in that it comprises means for determining $A_{qr}$ and Vq by the following relations:

$$A_{qr} = EJ_0\ (2\pi f_d|q\text{-}r|T_s)+R_{mn} \tag{5}$$

$$V_q = EJ_0\ (2\pi f_d|q\text{-}n_{before}|T_s) \tag{6}$$

wherein: $R_{mn} = E(b)^{(n)}(t)b^{(n+m)}(t)^{*})$, and $b^{(n)}(t) = \hat{h}^{(n)}(t)\text{-}h^{(n)}(t)$ represents the estimation error, or noise, for the channel impulse response time, E is the average energy of the channel impulse response, $f_d$ is the Doppler frequency, $T_s$ is the time slot duration, and $J_0(.)$ is the zero order Bessel function.

**35.** A station according to claim 34, characterized in that it comprises means for assigning a constant value to $R_{mn}$.

**36.** A station according to claim 34 or 35, characterized in that it comprises means for determining $A_{qr}$ and Vq according to the following formulas:

$$A_{qr} = EJ_0\ (2\pi f_d|q\text{-}r|T_s)+\sigma^2\delta_{qr} \tag{7}$$

$$V_q = EJ_0\ (2\pi f_d|q\text{-}n_{before}|T_s) \tag{8}$$

in these formulas, $\sigma^2$ is the variance of a white noise and $\delta_{qr}$ is a Dirac function such that $\delta_{qr} = 1$ for q = r and $\delta_{qr} = 0$ for q ≠ r.

**37.** A station according to claim 36, characterized in that said determination means assign a constant value to $E/\sigma^2$.

**38.** A station according to claim 36, characterized in that it comprises means for estimating $E/\sigma^2$ during a communication.

**39.** A station according to claim 33, characterized in that it comprises means for determining the coefficients $\omega_q$ by the following formula:

$$\omega_q = J_0\ (2\pi f_d|q\text{-}n_{before}|T_s) \tag{9}$$

**40.** A station according to any of claims 34-39, characterized in that it comprises means for determining the number of time slots $n_{before}$ and $n_{after}$ which are used for the averaging such that said numbers satisfy to the following relations:

$$2\pi f_d n_{before} T_s < x_0 \tag{10}$$

$$2\pi f_d n_{after} T_s < x_0 \tag{11}$$

where $x_0$ is the smallest positive number such that $J_0(x_0) = 0$.

**41.** A station according to any of claims 34-39, characterized in that it comprises a look-up table for the determination of the zero order Bessel function.

**42.** A station according to any of the claims 33-41, characterized in that it comprises means for determining dynamically the weighting coefficients.

**43.** A station according to any of claim 33-41, characterized in that it comprises memory means containing predetermined weighting coefficients for each mobile terminal speed or for each Doppler frequency of the corresponding terminal with which it communicates.

**44.** A station according to any of claims 33-43, characterized in that it comprises means for estimating the speed or Doppler frequency of each mobile terminal with which it communicates.

**45.** A station according to any of claims 33-43, characterized in that the calculating means are such that the weighting coefficients are made independent of the speed or Doppler frequency of each mobile terminal with which the station is communicating, these coefficients being calculated for one average speed.

**46.** A station according to claim 45, characterized in that the calculating means are such that the average speed depends on the location of the mobile terminal.

**47.** A station according to claim 47 characterized in that it comprises further calculation means using the mobile terminal speed or Doppler frequency to calculate the weighting coefficients in the base station, said base station comprising means to transmit the values of the weighting coefficients to the mobile terminal.

**48.** A station according to claim 44, characterized in that it comprises means for transmitting the mobile terminal speed to each terminal with which it communicates.

**49.** A station according to any of claims 33-43, characterized in that the calculating means comprise memory means containing a limited number of discrete values assigned to the mobile terminal speed, or Doppler frequency.

**Amended claims in accordance with Rule 86(2) EPC.**

**1.** Method for estimating the channel impulse response in a digital telecommunication system, such as a CDMA system, wherein data and control signals are transmitted during time slots, these control signals comprising pilot bits which are used for the channel impulse response estimation, and wherein the channel impulse response is averaged over several slots, different weighting coefficients being used for the calculation of the average channel impulse response $h^{(n)}_{average}$ according to the formula below:

$$\hat{h}^{(n)}_{average} = \sum_{j=0}^{n_{before} + n_{after}} \omega_j \hat{h}^{(j+n-n_{before})} \tag{F},$$

$n_{before}$ and $n_{after}$ being the number of preceding and following time slots before and after the current time slot, and $\omega_j$ are said weighting coefficients, characterized in that each weighting coefficient $\omega_k$ is calculated by using the following expression:

$$\omega_k = (A^{-1}V)_k \tag{1}$$

where A is a square matrix of size $(n_{before}+n_{after}+1)x(n_{before}+n_{after}+1)$ and V a vector of length $(n_{before}+n_{after}+1)$, A and V being defined by:

$$A_{qr} - E(\hat{h}^{(q)}(t)\hat{h}^{(r)}(t)^*) \tag{2}$$

$$V_q = E(\hat{h}^{(q+n-n_{before})}(t)h^{(n)}(t)^*) \tag{3}$$

In these formulas:

$A_{qr}$ is the component of matrix A of line q and column r,
$V_q$ is the $q^{th}$ component of vector V,
t is the time,
the function E(.) is the mathematical expectation, and
$h^{(r)}(t)^*$ is the conjugate of $h^{(r)}(t)$.

2. Method according to claim 1, characterized in that $A_{qr}$ and $V_q$ are determined by the following relations:

$$A_{qr} = EJ_0(2\pi f_d|q-r|T_s)+R_{mn} \tag{5}$$

$$Vq = EJ_0(2\pi f_d|q-n_{before}|T_s) \tag{6},$$

wherein: $R_{mn} = E(b^{(n)}(t)b^{(n+m)}(t)^*)$, and $b^{(n)}(t) = \hat{h}^{(n)}(t)-h^{(n)}(t)$ represents the estimation error, or noise, for the channel impulse response time, E is the average energy of the channel impulse response, $f_d$ is the Doppler frequency, $T_s$ is the time slot duration, and $J_0(.)$ is the zero order Bessel function.

3. Method according to claim 2, characterized in that a constant value is assigned to $R_{mn}$.

4. Method according to claim 2 or 3, wherein $A_{qr}$ and $V_q$ are determined according to the following formulas:

$$A_{qr} = EJ_0(2\pi f_d|q-r|T_s)+\sigma^2\delta_{qr} \tag{7}$$

$$V_q = EJ_0(2\pi f_d|q-n_{before}|T_s) \tag{8},$$

in these formulas, $\sigma^2$ is the variance of a white noise and $\delta_{qr}$ is a Dirac function such that $\delta_{qr} = 1$ for q = r and $\delta_{qr} = 0$ for q ≠ r.

5. Method according to claim 4, wherein a constant value is assigned to $E/\sigma^2$.

6. Method according to claim 4, wherein $E/\sigma^2$ is estimated during a communication.

7. Method according to claim 1, wherein the coefficients $\omega_q$ are determined by the following formula:

$$\omega_q = J_0(2\pi f_d|q-n_{before}|T_s) \tag{9}.$$

8. Method according to any of claims 2-7, characterized in that the number of time slots $n_{before}$ and $n_{after}$ which are used for the averaging satisfy to the following relations:

$$2\pi f_d n_{before} T_s < x_0 \tag{10}$$

$$2\pi f_d n_{after} T_s < x_0 \tag{11}$$

where $x_0$ is the smallest positive number such that $J_0(x_0) = 0$.

**9.** Method according to any of claims 2-7, characterized in that, for the calculation of the zero order Bessel function, use is made of a look-up table.

**10.** A method for estimating the channel impulse response in a digital telecommunication sytem, such as a CDMA system, for communication with a mobile station, a method wherein the channel impulse response is averaged over several time slots, different weighting coefficients being used for the calculation of the average channel impulse resonse for these different time slots, a method wherein said weighting coefficients are determined dynamically, or predetermined, as a function of the speed or Doppler frequency of said mobile station.

**11.** A method according to claim 10, wherein said weighting coefficients are determined dynamically, or predetermined, as a function of the speed or Doppler frequency of said mobile station, according to any of claims 1 to 9.

**12.** Method according to any of claims 1-11, characterized in that the speed or Doppler frequency of the mobile terminal is estimated in the mobile terminal.

**13.** Method according to any of claims 1-11, characterized in that the weighting coefficients are made independent of the speed or Doppler frequency, these coefficients being calculated for one average speed.

**14.** Method according to claim 13, characterized in that the average speed depends on the location of the mobile terminal.

**15.** Method according any of claims 1-11, characterized in that the mobile terminal speed or mobile terminal Doppler frequency is determined in the base station communicating with the mobile terminal and in that this mobile terminal speed or Doppler frequency is used to calculate the weighting coefficients either in the mobile terminal, or in the base station, the base station transmitting the values of the weighting coefficients to the mobile terminal in the latter case.

**16.** Method according to any of claims 1-11, characterized in that a limited number of discrete values is assigned to the mobile terminal speed, or Doppler frequency.

**17.** A mobile terminal device comprising means for estimating the channel impulse response for a digital telecommunication system, such as a CDMA system, wherein data and control signals are transmitted during time slots, these control signals comprising pilot bits which are used for the channel impulse response estimation, and wherein the channel impulse response is averaged over several slots, different weighting coefficients being used for the calculation of the average channel impulse response $h^{(n)}_{average}$ according to the formula below:

$$\hat{h}^{(n)}{}_{average} = \sum_{j=0}^{n_{before} + n_{after}} \omega_j \hat{h}^{(j+n-n_{before})} \tag{F},$$

$n_{before}$ and $n_{after}$ being the number of preceding and following time slots before and after the current time slot, and $\omega_j$ are said weighting coefficients, characterized in that the means for estimating the channel impulse response comprises means for calculating each weighting coefficient $\omega_k$ by using the following expression:

$$\omega_k = (A^{-1}V)_k \tag{1}$$

where A is a square matrix of size $(n_{before}+n_{after}+1) \times (n_{before}+n_{after}+1)$ and V a vector of length $(n_{before}+n_{after}+1)$, A and V being defined by:

$$A_{qr} = E(\hat{h}^{(q)}(t)\hat{h}^{(r)}(t)^*) \tag{2}$$

$$V_q = E(\hat{h}^{(q+n-n_{before})}(t)h^{(n)}(t)^*) \tag{3}$$

In these formulas:

$A_{qr}$ is the component of matrix A of line q and column r,
$V_q$ is the $q^{th}$ component of vector V,
t is the time,
the function E(.) is the mathematical expectation, and
$h^{(r)}(t)^*$ is the conjugate of $h^{(r)}(t)$.

**18.** A terminal device according to claim 17, characterized in that, said calculation means comprise means for determining $A_{qr}$ and $V_q$ by the following relations:

$$A_{qr} = EJ_0(2\pi f_d|q\text{-}r|T_s)+R_{mn} \tag{5}$$

$$Vq = EJ_0(2\pi f_d|q\text{-}n_{before}|T_s) \tag{6},$$

wherein: $R_{mn} = E(b^{(n)}(t)b^{(n+m)}(t)^*)$, and $b^{(n)}(t) = \hat{h}^{(n)}(t)\text{-}h^{(n)}(t)$ represents the estimation error, or noise, for the channel impulse response time, E is the average energy of the channel impulse response, $f_d$ is the Doppler frequency, $T_s$ is the time slot duration, and $J_0(.)$ is the zero order Bessel function.

**19.** A terminal device according to claim 18, characterized in that said determining means comprise means for assigning a constant value to $R_{mn}$.

**20.** A terminal device according to claim 18 or 19, characterized in that said determination means comprise means to determine $A_{qr}$ and $V_q$ according to the following formulas:

$$A_{qr} = EJ_0(2\pi f_d|q\text{-}r|T_s)+\sigma^2\delta_{qr} \tag{7}$$

$$V_q = EJ_0(2\pi f_d|q\text{-}n_{before}|T_s) \tag{8},$$

in these formulas, $\sigma^2$ is the variance of a white noise and $\delta_{qr}$ is a Dirac function such that $\delta_{qr} = 1$ for $q = r$ and $\delta_{qr} = 0$ for $q \neq r$.

**21.** A terminal device according to claim 20, characterized in that it comprises means to assign a constant value to $E/\sigma^2$.

**22.** A terminal device according to claim 20, characterized in that it comprises means to estimate $E/\sigma^2$ during a communication.

**23.** A terminal device according to claim 17, characterized in that it comprises means to determine the coefficients $\omega_q$ by the following formula:

$$\omega_q = J_0(2\pi f_d|q\text{-}n_{before}|T_s) \tag{9}.$$

**24.** A terminal device according to any of claims 18-22, characterized in that it comprises means to determine the number of time slots $n_{before}$ and $n_{after}$ which are used for the averaging such that said numbers satisfy to the following relations:

$$2\pi f_d n_{before} T_s < x_0 \tag{10}$$

$$2\pi f_d n_{after} T_s < x_0 \tag{11}$$

where $x_0$ is the smallest positive number such that $J_0(x_0) = 0$.

**25.** A terminal device according to any of claims 18-23, characterized in that it comprises a look-up table for the determination of the zero order Bessel function.

**26.** A mobile terminal device comprising means for estimating the channel impulse response in a digital communication system, such as a CDMA system, for communicating with this mobile station, wherein the channel impulse response is averaged over several time slots, different weighting coefficients being used for the calculation of the average channel impulse response for these different time slots, wherein said means for estimating the channel impulse response comprise means for determining said weigthing coefficients dynamically, or for storing weighting coefficients pre-determined, as a function of the speed or Doppler frequency of said mobile station.

**27.** A mobile terminal according to claim 26, wherein said weighting coefficients are determined dynamically, or pre-determined, as a function of the speed or Doppler frequency of said mobile station, according to any of claims 1 to 9.

**28.** A terminal device according to any of claims 17-27, characterized in that it comprises means for estimating the speed or the Doppler frequency.

**29.** A terminal device according to any of claims 17-28, characterized in that the calculating means are such that the weighting coefficients are independent of the speed or Doppler frequency, these coefficients being calculated for one average speed.

**30.** A terminal device according to claim 29, characterized in that the calculating means are such that the average speed depends on the location of the mobile terminal.

**31.** A terminal device according any of claims 17-27, characterized in that it comprises means for receiving, from the base station communicating with this mobile terminal, a signal representing the mobile terminal speed or mobile terminal Doppler frequency and in that this mobile terminal speed or Doppler frequency is used to calculate the weighting coefficients.

**32.** A terminal device according to any of claims 17-27, characterized in that the calculating means comprise memory means containing a limited number of discrete values assigned to the mobile terminal speed, or Doppler frequency.

**33.** A base station for a digital telecommunication system, such as a CDMA system, wherein said station is able to communicate with a plurality of mobile terminals and it comprises means for estimating the channel impulse response of each channel, the telecommunication system being such that data and control signals are transmitted during time slots, these control signals comprising pilot bits which are used for the channel impulse response estimation, and wherein the channel impulse response is averaged over several slots, different weighting coefficients being used for the calculation of the average channel impulse response $h^{(n)}_{average}$ according to the formula below:

$$\hat{h}^{(n)}_{average} = \sum_{j=0}^{n_{before} + n_{after}} \omega_j \hat{h}^{(j+n-n_{before})} \tag{F},$$

$n_{before}$ and $n_{after}$ being the number of preceding and following time slots before and after the current time slot, and

$\omega_j$ are said weighting coefficients, characterized in that the station comprises means for calculating each weighting coefficient $\omega_k$ by using the following expression:

$$\omega_k = (A^{-1}V)_k \tag{1}$$

where A is a square matrix of size $(n_{before}+n_{after}+1)\times(n_{before}+n_{after}+1)$ and V a vector of length $(n_{before}+n_{after}+1)$, A and V being defined by:

$$A_{qr} = E(\hat{h}^{(q)}(t)\hat{h}^{(r)}(t)^*) \tag{2}$$

$$V_q = E(\hat{h}^{(q+n-n_{before})}(t)h^{(n)}(t)^*) \tag{3}$$

In these formulas:

$A_{qr}$ is the component of matrix A of line q and column r,
$V_q$ is the $q^{th}$ component of vector V,
t is the time,
the function E(.) is the mathematical expectation, and
$h^{(r)}(t)^*$ is the conjugate of $h^{(r)}(t)$.

**34.** A station according to claim 33, characterized in that it comprises means for determining $A_{qr}$ and $V_q$ by the following relations:

$$A_{qr} = EJ_0(2\pi f_d|q-r|T_s) + R_{mn} \tag{5}$$

$$Vq = EJ_0(2\pi f_d|q-n_{before}|T_s) \tag{6},$$

wherein: $R_{mn} = E(b^{(n)}(t)b^{(n+m)}(t)^*)$, and $b^{(n)}(t) = \hat{h}^{(n)}(t)-h^{(n)}(t)$ represents the estimation error, or noise, for the channel impulse response time, E is the average energy of the channel impulse response, $f_d$ is the Doppler frequency, $T_s$ is the time slot duration, and $J_0(.)$ is the zero order Bessel function.

**35.** A station according to claim 34, characterized in that it comprises means for assigning a constant value to $R_{mn}$.

**36.** A station according to claim 34 or 35, characterized in that it comprises means for determining $A_{qr}$ and $V_q$ according to the following formulas:

$$A_{qr} = EJ_0(2\pi f_d|q-r|T_s)+\sigma^2\delta_{qr} \tag{7}$$

$$V_q = EJ_0(2\pi f_d|q-n_{before}|T_s) \tag{8},$$

in these formulas, $\sigma^2$ is the variance of a white noise and $\delta_{qr}$ is a Dirac function such that $\delta_{qr} = 1$ for q = r and $\delta_{qr} = 0$ for q $\neq$ r.

**37.** A station according to claim 36, characterized in that said determination means assign a constant value to $E/\sigma^2$.

**38.** A station according to claim 36, characterized in that it comprises means for estimating $E/\sigma^2$ during a communication.

**39.** A station according to claim 33, characterized in that it comprises means for determining the coefficients $\omega_q$ by the following formula:

$$\omega_q = J_0(2\pi f_d |q - n_{before}| T_s) \tag{9}$$

40. A station according to any of claims 34-39, characterized in that it comprises means for determining the number of time slots $n_{before}$ and $n_{after}$ which are used for the averaging such that said numbers satisfy to the following relations:

$$2\pi f_d n_{before} T_s < x_0 \tag{10}$$

$$2\pi f_d n_{after} T_s < x_0 \tag{11}$$

where $x_0$ is the smallest positive number such that $J_0(x_0) = 0$.

41. A station according to any of claims 34-39, characterized in that it comprises a look-up table for the determination of the zero order Bessel function.

42. A base station comprising means for estimating the channel impulse response in a digital communication system, such as a CDMA system, for communicating with a mobile station, wherein the channel impulse response is averaged over several time slots, different weighting coefficients being used for the calculation of the average channel impulse response for these different time slots, wherein said means for estimating the channel impulse response comprise means for determining said weigthing coefficients dynamically, or for storing weighting coefficients predetermined, as a function of the speed or Doppler frequency of said mobile station.

43. A base station according to claim 42, wherein said weighting coefficients are determined dynamically, or predetermined, as a function of the speed or Doppler frequency of said mobile station, according to any of claims 1 to 9.

44. A station according to any of claims 33-43, characterized in that it comprises means for estimating the speed or Doppler frequency of each mobile terminal with which it communicates.

45. A station according to any of claims 33-43, characterized in that the calculating means are such that the weighting coefficients are made independent of the speed or Doppler frequency of each mobile terminal with which the station is communicating, these coefficients being calculated for one average speed.

46. A station according to claim 45, characterized in that the calculating means are such that the average speed depends on the location of the mobile terminal.

47. A station according to any of claims 33-43, characterized in that it comprises further calculation means using the mobile terminal speed or Doppler frequency to calculate the weighting coefficients in the base station, said base station comprising means to transmit the values of the weighting coefficients to the mobile terminal.

48. A station according to claim 44, characterized in that it comprises means for transmitting the mobile terminal speed to each terminal with which it communicates.

49. A station according to any of claims 33-43, characterized in that the calculating means comprise memory means containing a limited number of discrete values assigned to the mobile terminal speed, or Doppler frequency.

FIG.1

$n_{before}$

$n$

$n_{after}$

path p

Transmitter

Receiver

FIG.2

$J(x)$

$x_0$

$x$

FIG.3

**European Patent Office**

## EUROPEAN SEARCH REPORT

Application Number

EP 99 40 3087

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | ABETA: "Performance comparison between time-multiplexed pilot channel and parallel pilot channel for coherent rake combining in DS-CDMA mobile radio" IEICE TRANSACTIONS ON COMMUNICATIONS, vol. E81-B, no. 7, July 1998 (1998-07), pages 1417-1425, XP000790175 Tokyo, JP ISSN: 0916-8516 * page 1417, right-hand column, paragraph 2 * * page 1419, right-hand column * | 1-49 | H04L25/02 H04B7/005 |
| A | ANDOH ET AL.: "Channel estimation using time multiplexed pilot symbols for coherent RAKE combining for DS-CDMA mobile radio" INTERNATIONAL SYMPOSIUM ON PERSONAL, INDOOR AND MOBILE RADIO COMMUNICATIONS , 1 - 4 September 1997, pages 954-958, XP002135366 New York, US ISBN: 0-7803-3871-5 * figure 2 * * page 995, left-hand column, paragraph 1 * * page 995, right-hand column, paragraph 3 * | 1-49 | **TECHNICAL FIELDS SEARCHED (Int.Cl.7)** H04L H04B |

−/−

The present search report has been drawn up for all claims

| Place of search | Date of completion of the search | Examiner |
|---|---|---|
| THE HAGUE | 11 April 2000 | Scriven, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 99 40 3087

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | ANDOH ET AL.: "Channel estimation filter using time-multiplexed pilot channel for coherent RAKE combining in DS-CDMA mobile radio" IEICE TRANSACTIONS ON COMMUNICATIONS , vol. E81-B, no. 7, July 1998 (1998-07), pages 1517-1525, XP000790186 Tokyo, JP ISSN: 0916-8516 * page 1517, right-hand column, paragraph 3 * * page 1519, right-hand column, paragraph 2 * | 1-49 | |
| A | JINDONG LIN ET AL.: "An optimal windowed recursive least squares algorithm for fading channel estimation" INTERNATIONAL SYMPOSIUM ON CIRCUITS AND SYSTEMS , 3 - 6 May 1993, pages 734-737, XP000410103 New York, US ISBN: 0-7803-1281-3 * Section 5 * | 1,17,33 | TECHNICAL FIELDS SEARCHED (Int.Cl.7) |
| A | LEKE, CIOFFI: "Effects of channel estimation errors on discrete multitone modulation (DMT) systems in a Rayleigh fading environment" ASILOMAR CONFERENCE ON SIGNALS, SYSTEMS AND COMPUTERS , 2 - 5 November 1997, pages 595-599, XP002135367 Los Alamitos, US ISBN: 0-8186-8316-3 * abstract * | 1,17,33 | |
| A | US 5 712 877 A (HO, JAE HYUNG KIM) 27 January 1998 (1998-01-27) * column 4, line 39 - line 49 * | 2,4,7, 18,20, 23,34, 36,39 | |

The present search report has been drawn up for all claims

| Place of search | Date of completion of the search | Examiner |
|---|---|---|
| THE HAGUE | 11 April 2000 | Scriven, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 40 3087

This annex lists the patent family members relating to the patent documents cited in the above—mentioned European search report.
The members are as contained in the European Patent Office EDP file on
The European Patent Office is in no way liable for these particulars which are merely given for the purpose of information.

11-04-2000

| Patent document cited in search report | | Publication date | Patent family member(s) | Publication date |
|---|---|---|---|---|
| US 5712877 | A | 27-01-1998 | NONE | |

For more details about this annex : see Official Journal of the European Patent Office, No. 12/82